# EUROPEAN PATENT APPLICATION

(11) **EP 1 521 468 A1**
(43) Date of publication of application: **06.04.2005**
(21) Application number: 04019969.7
(22) Date of filing: 23.08.2004
(51) Int. Cl.: H04N 7/173, H04N 5/445

(54) **Miniaturized video feed generation and user-interface**

(30) Priority: 30.09.2003 US 676246
(71) Applicant: MICROSOFT CORPORATION, Redmond, WA 98052 (US)
(72) Inventor: Barrett, Peter T., San Francisco CA 94117 (US); Green, Dustin L., Redwood CA 94061 (US); Grossman IV, John H., Fremont CA 94539 (US); Baldwin, James Armand, Redwood CA 94062 (US)
(74) Representative: Grünecker, Kinkeldey, Stockmair & Schwanhäusser Anwaltssozietät

(57) **Abstract**

An implementation, which is described herein, facilitates a presentation of multiple miniaturized video feeds to a multimedia receiver. It further facilitates a user-interface employing multiple miniaturized video feeds to a multimedia receiver. This abstract itself is not intended to limit the scope of this patent. The scope of the present invention is pointed out in the appending claims.

## Description

### TECHNICAL FIELD

This invention generally relates to multimedia technology.

### BACKGROUND

When a viewer watches a multimedia system (for example, on a television), the viewer typically only experiences the content of a maximum of a small number of video feeds at a time. That is because multimedia systems typically have a limited (e.g., 1-2) number of tuners, and typically a tuner is required for each separate video feed being experienced.

Herein, a ''video feed" is a multimedia object containing visual content that typically is compressed and encoded in accordance with mechanisms for this purpose, generally available now or in the future. Furthermore, such a video feed is typically intended to be decoded and rendered in accordance with mechanisms for this purpose, generally available now or in the future.

In some instances, the television systems are equipped with picture-in-picture (PIP) technology that enables them to present more than one video feed on the screen simultaneously. Typically, one small video feed is superimposed over a main video feed, which uses all of the rest of the screen area. However, the number of video feeds that may be simultaneously presented is limited to the number of tuners on the multimedia system. That is typically 1 or 2 tuners.

In some instances, the multimedia provider (e.g., a cable television provider) may provide one or more guide-like channels. Such a guide-like channel may present multiple apparent video feeds concurrently on the screen.

However, this is actually a single pre-generated video feed (e.g., channel) being received by the multimedia system. The multimedia provider has generated this single video feed using multiple video feeds. However, the user only receives one video feed even though it looks like multiple ones.

With this pre-generated single feed with embedded feeds, there is no viewer-interactivity available. Since it is one video feed, it is not possible for the receiving multimedia device to distinguish any part of the feed from another part (even if each sub-video portion looks separate from the others). If audio is provided, it is selected by the provider. It may be the audio of only one of the embedded video feeds at a time, and the viewer has no control over which one.

With this pre-generated single feed, the receiving unit (and, ultimately, the viewer) has no control over its presentation. There is no flexibility or customization of what is displayed on this single feed.

### SUMMARY

An implementation as described herein facilitates a presentation of multiple miniaturized video feeds to a multimedia receiver. It further facilitates a user-interface employing multiple miniaturized video feeds to a multimedia receiver.

This summary itself is not intended to limit the scope of this patent. Moreover, the title of this patent is not intended to limit the scope of this patent. For a better understanding of the present invention, please see the following detailed description and appending claims, taken in conjunction with the accompanying drawings. The scope of the present invention is pointed out in the appending claims.

### BRIEF DESCRIPTION OF THE DRAWINGS

The same numbers are used throughout the drawings to reference like elements and features.

Fig. 1 is a schematic diagram illustrating a video-feed reduction system in accordance with an implementation.

Fig. 2 is a flow diagram showing a methodological implementation described herein.

Fig. 3 is a diagram illustrating a user-interface in accordance with an implementation.

Fig. 4A is a diagram illustrating another user-interface in accordance with an implementation.

Fig. 4B is a diagram illustrating another user-interface in accordance with an implementation.

Fig. 5 is a flow diagram showing a methodological implementation described herein.

Fig. 6 illustrates an exemplary environment in which an implementation described herein may be employed.

Fig. 7 illustrates an example presentation device, a television, and various input devices that interact with the presentation device.

Fig. 8 is a block diagram that illustrates components of the example presentation device(s) shown in Figs. 6 and 7.

Fig. 9 is an example of a computing operating environment capable of (wholly or partially) implementing at least one embodiment described herein.

### DETAILED DESCRIPTION

In the following description, for purposes of explanation, specific numbers, materials and configurations are set forth in order to provide a thorough understanding of the present invention. However, it will be apparent to one skilled in the art that the present invention may be practiced without the specific exemplary details. In other instances, well-known features are omitted or simplified to clarify the description of the exemplary implementations of the present invention and, thereby, to better explain the present invention. Furthermore, for ease of understanding, certain method steps are delineated as separate steps; however, these separately delineated steps should not be construed as necessarily order dependent in their performance.

The following description sets forth one or more exemplary implementations of a Miniaturized Video Feed Generation and User-Interface that incorporate elements recited in the appended claims. These implementations are described with specificity in order to meet statutory written description, enabling, and best-mode requirements. However, the description itself is not intended to limit the scope of this patent.

These exemplary implementations, described herein, are examples. These exemplary implementations do not limit the scope of the claimed present invention; rather, the present invention might also be embodied and implemented in other ways, in conjunction with other present or future technologies.

An example of an embodiment of a Miniaturized Video Feed Generation and User-Interface may be referred to as either an "exemplary video-feed miniaturizer" or an "exemplary miniature video-feed UI producer."

Herein, presenting includes communicating the media content to a display and/or audio device. It may also include storing media content in a memory and/or transferring such content to another device or component.

Herein, a "video feed" is assumed to be a multimedia object that is presented "live." That means that it is presented more or less as it is received by the receiver. A video feed would not be "live" if still frames of the feed were shown instead of full-motion video.

Herein, a "thumbnail video" refers to a live miniaturized video feed.

### Introduction

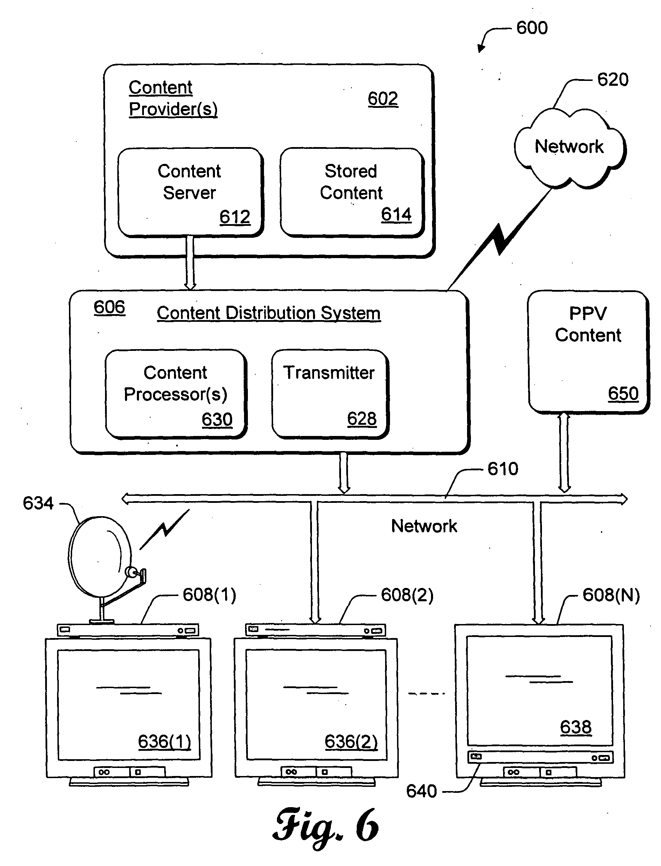

The one or more exemplary implementations of the invention, described herein, may be implemented (in whole or in part) by components like that shown in Figs. 6 - 9.

The exemplary video-feed miniaturizer generates one or more mini-size low-bit-rate alternate video feeds. It does this by encoding the feeds with a lower bit-rate and a lower resolution than their original full versions.

With these mini video feeds, the exemplary miniature video-feed UI producer may produce a user-interface (UI) where multiple and live mini video feeds may be displayed simultaneously. There are numerous applications for this sort of UI. For example, a television guide (with or without electronic program information), advanced PIP functionality, and selection of advanced DVD-like features.

Unlike conventional approaches, the exemplary miniature video-feed UI producer does not utilize tuners to receive multiple video feeds. Rather, it uses a communication network. Therefore, it may receive and use multiple video feeds. Rather than being a fixed number of feeds, the limitation on the number of feeds is based upon the total bandwidth available to the receiver and the bit-rate of each video feed being received.

The exemplary miniature video-feed UI producer may present many of these mini-feeds at the same time, because each is smaller (in terms of resolution) than their original versions, and each is encoded with a bit-rate low enough for many of them to be played over the receiver's network connection at the same time.

### Operation of Video-Feed Miniaturization

The exemplary video-feed miniaturizer is typically situated within the control of the multimedia provider. For example, it may be part of a headend service that provides multimedia content to multiple subscribers. An example of such a headend service is a content distribution system 606 of Fig. 6.

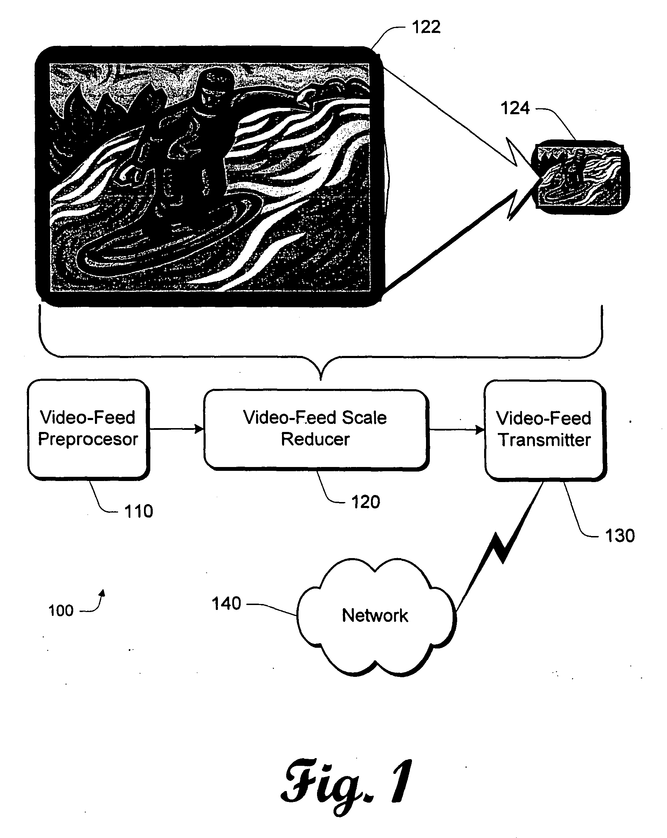

Fig. 1 illustrates a video-feed miniaturization system 100. This is an example of the exemplary video-feed miniaturizer.

Because the video-feed miniaturization system 100 sends already-reduced video feeds to a receiver, the receiver does not need to do computationally intensive, variable-scale, interlaced video resizing. This reduces cost at the receiver and increases speed and performance.

The system includes a video-feed preprocessor 110, a video-feed scale reducer 120, and a video-feed transmitter 130. Furthermore, it may be communicatively coupled to a network 140, such as the multicast-capable communications network.

The video-feed preprocessor 110 may modify an incoming full-scale video feed in such a manner as to make scale-reduction quicker and/or easier. For example, it may de-interlace or blur the incoming video feed. The degree of resolution decrease may be adjustable and even, perhaps, selectable (e.g., by request of a receiver).

As part of this function, the video-feed preprocessor 110 may employ a line-doubler which enhances the picture quality of a video image by combining the two interlaced fields (grouping of all the odd or all the even lines that make up a complete image; two fields make a frame or a complete image) and progressively displaying complete frames instead of fields (displaying all the odd and even lines generated in order one, two, three, etc.).

The video-feed scale reducer 120 receives the output from the preprocessor and reduces its resolution. This is illustrated by snapshots 122 and 124 of a sample video feed. The video feed remains "live" when reduced.

Those of ordinary skill in the art are familiar with the techniques and approaches available to reduce the resolution of a video feed. Any suitable technique and approach may be employed by the video-feed scale reducer 120.

The video-feed transmitter 130 sends the now-miniaturized video feeds over the network 140 to one or more receivers (that have typically requested it).

The multimedia provider may have multiple video-feed miniaturization systems or systems capable of handling multiple video feeds concurrently. With this capability, the provider may be "thumbnailing" multiple video feeds concurrently even though no specific request has been made for a thumbnail version of a particular video feed. However, when it is done this way, the provider may react quickly to a request when one arrives.

### Methodological Implementation of the Exemplary Video-Feed Miniaturizer

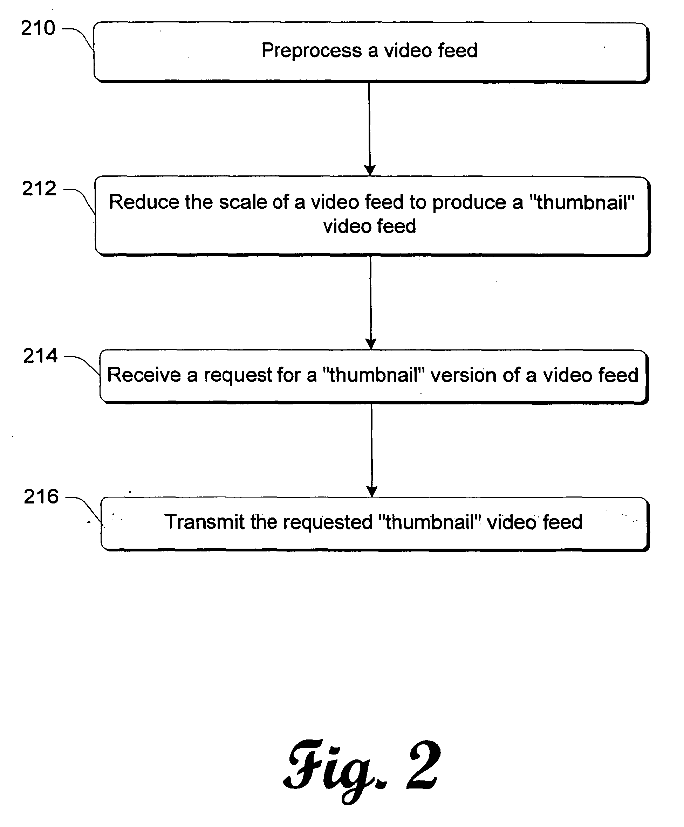

Fig. 2 shows a methodological implementation of the exemplary video-feed miniaturizer. The implementation is performed to miniaturize video feeds. These methodological implementations may be performed in software, hardware, or a combination thereof.

At 210 of Fig. 2, the exemplary video-feed miniaturizer preprocesses an incoming video feed to prepare it for miniaturization.

At 212, the exemplary video-feed miniaturizer reduces the resolution of the video feed to produce a "thumbnail" video feed.

At 214, it receives a request (from a receiver) for a "thumbnail" version of a video feed.

At 216, it sends the requested "thumbnail" video feed to the receiver.

### Operation of User-Interface Production

The exemplary miniature video-feed UI producer is typically a hardware or software component (or a combination of both) of a multimedia receiver, such as a presentation device 608 of Figs. 6-8.

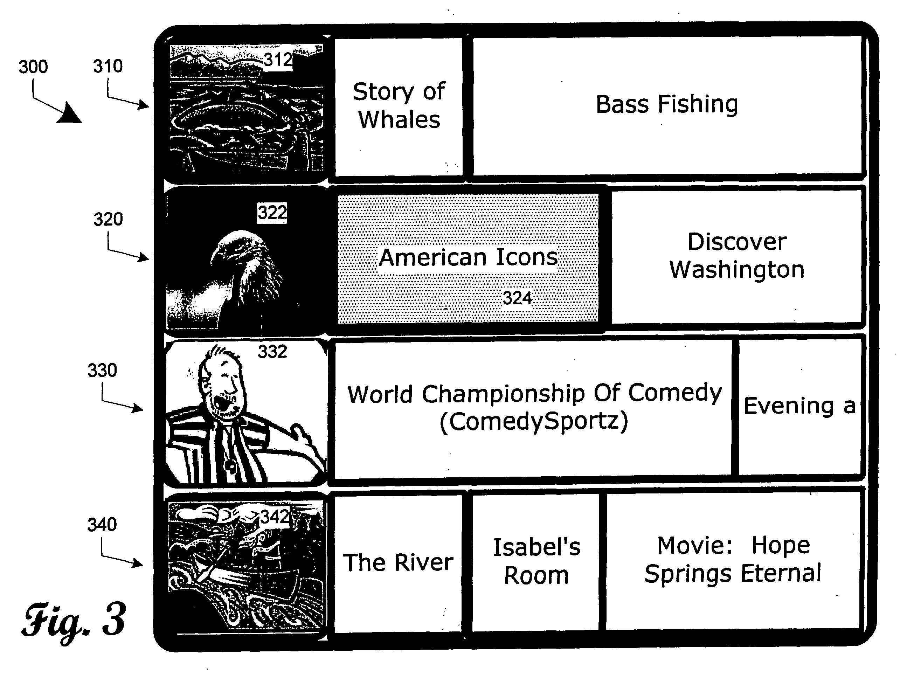

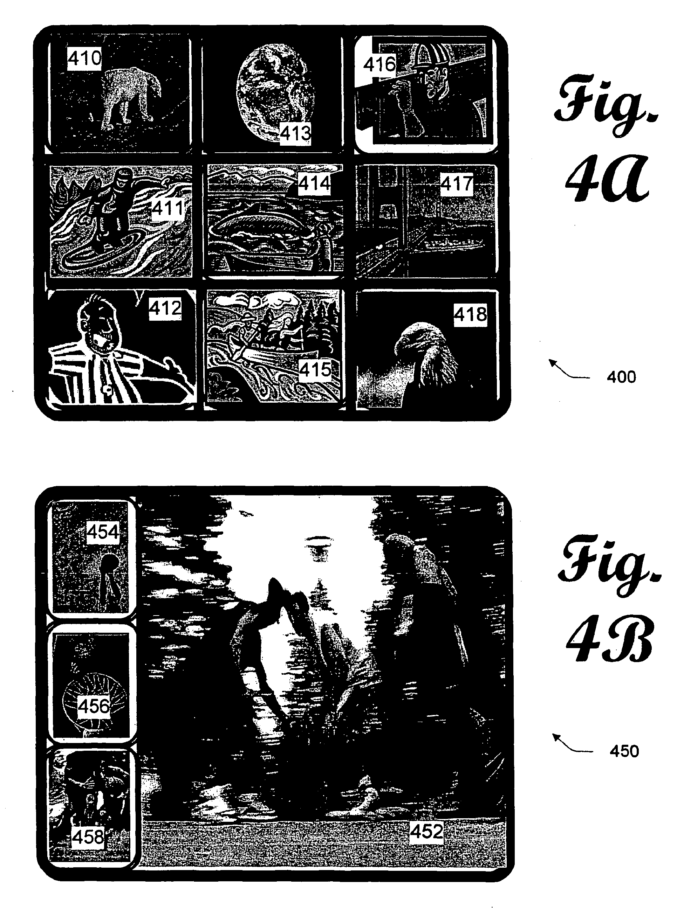

Figs. 3, 4A, and 4B illustrate examples of user-interfaces that may be produced by the exemplary miniature video-feed UI producer using thumbnail video feeds from the exemplary video-feed miniaturizer. Except for feed 452, each picture shown in Figs. 3, 4A, and 4B represents a live thumbnail video feed, which was received from the exemplary video-feed miniaturizer. Since the medium is incapable of fully illustrating this point, it is noted once again that these thumbnail video feeds in Figs. 3, 4A, and 4B (indicated by the still pictures) are actually moving and live video feeds.

### Television Guide UI with Thumbnail Video Feeds & Program Info

Fig. 3 shows an example of a television guide UI 300 with thumbnail video feeds and electronic program information. In this example, the exemplary miniature video-feed UI producer generates the UI with four lines of channel information and its current live thumbnail video. For this UI, each line is presumed to be a television or video "channel."

In this manner, the exemplary miniature video-feed UI producer produces a guide that displays a small version of what's on now on each channel. Because audio and video are sent to the receiver separately, the exemplary miniature video-feed UI producer may efficiently switch the receiver's audio to a highlighted channel (if desired), or play the audio of the on-going main stream (which presumably is in the background).

Line 310 shows thumbnail video feeds 312 and program information (such as, "Story of Whales") on that same line. Presumably, that is the name of the program being presented in the thumbnail video feed 312.

Lines 320, 330, and 340 also show their thumbnail video feeds (which are 322, 332, and 342, respectively) and their associated program information.

Notice that the program information block 324 ( "American Icons") and its associated thumbnail video feed 322 are highlighted. Any of the thumbnail video feeds may be interactively highlighted by a user.

When this occurs, the audio associated with the highlighted thumbnail video is presented. The exemplary miniature video-feed UI producer may request it, or it may already be part of the thumbnail video feed. Since it may be confusing to play multiple audio streams concurrently, it is desirable to have only one play at a time. The exemplary miniature video-feed UI producer provides control to the user by allowing her to select which thumbnail video feed to hear by highlighting that one.

Also, the user interactively chooses to view at full-scale one of the thumbnail video feeds. She may do this by fully selecting (similar to the "double-clicking" concept) one of the thumbnail video feeds. At that point, the receiver requests the full-scale video feed (for example, via a multicast-capable network).

Also, the exemplary miniature video-feed UI producer zooms in on the thumbnail video feed so that it takes over the entire screen. It continues to present this enlarged thumbnail video feed (typically with its audio) until it is ready to present the full-scale version of the video feed. While the image quality of the enlarged thumbnail video feed is poor (especially compared to the full-scale version), it produces a nice effect during the time that a screen is otherwise typically blank.

### Television Guide UI with Thumbnail Video Feeds

Fig. 4A shows an example of another television guide UI 400 with thumbnail video feeds, but no electronic program information.

For this UI, the screen is divided into multiple boxes (e.g., nine boxes). Each box is presumed to be a television or video "channel." The thumbnail video feed for each channel is shown in each box. This is illustrated by thumbnail video feeds 410-418 of Fig. 4A.

Feed 412 is shown in negative to demonstrate that it is highlighted. The actions and operations on a highlighted feed are discussed above. Furthermore, the video may be selected for full-scale viewing. As a result, the video may be zoomed in the manner described above.

### PIP-type UI with Feature Selection

Fig. 4B shows an example of a Picture-in-Picture (PIP) type UI 450 with a full-scale video 452 of the on-going video feed and multiple PIP-type thumbnail video feeds 454, 456, and 458 for selecting other video feeds or other video options and features.

With this PIP-type UI 450, the user sees the full-screen video 452 of the on-going video feed, but also sees the thumbnail video of other channels. For example, the user may be watching a live basketball game on the main full-screen video 452 while "keeping an eye" on multiple other live basketball games.

Indeed, this PIP-type UI may be used for this or for any other traditional uses of PIP technology. However, here the user is not limited by the number of tuners of her multimedia system. Rather, she is only limited by the bandwidth available for sending multiple thumbnail video feeds. Furthermore, the user does not need to have a television system that is PIP capable. Rather, the receiver performs the function.

In addition, the PIP-type UI 450 may be used to provide the user a menu of video options and features where each one is represented by a thumbnail video feed. By selecting a thumbnail video feed (such as feeds 454, 456, and 458), a user may invoke one or more the following example options and features (which are only provided here as non-limiting examples):
- *Multiple Audio Tracks*: Each video feed may represent an audio track with alternative audio tracks. Common uses for an alternative audio track are for foreign languages, alternate soundtracks, isolated musical scores or audio commentaries by the director, cast & crew or others associated with the material.
- *Multiple Video Tracks*: Other video feeds may show different angles of a scene or different versions of a scene. It may show an alternative angle of the live sports action being shown on the main on-going full-scale video 452. It may show an instant replay starting a few seconds in the past (and even from different angles). It may show other video associated with the current presentation of the on-going video. For example, it may show deleted scenes that would have appeared near or at the point in the on-going video. It may show other videos (such as a documentary or a sequel) that are associated with the on-going video.
- *Subtitles:* Other video feeds may show subtitles or closed captioning.

### Methodological Implementation of the User-Interface Production

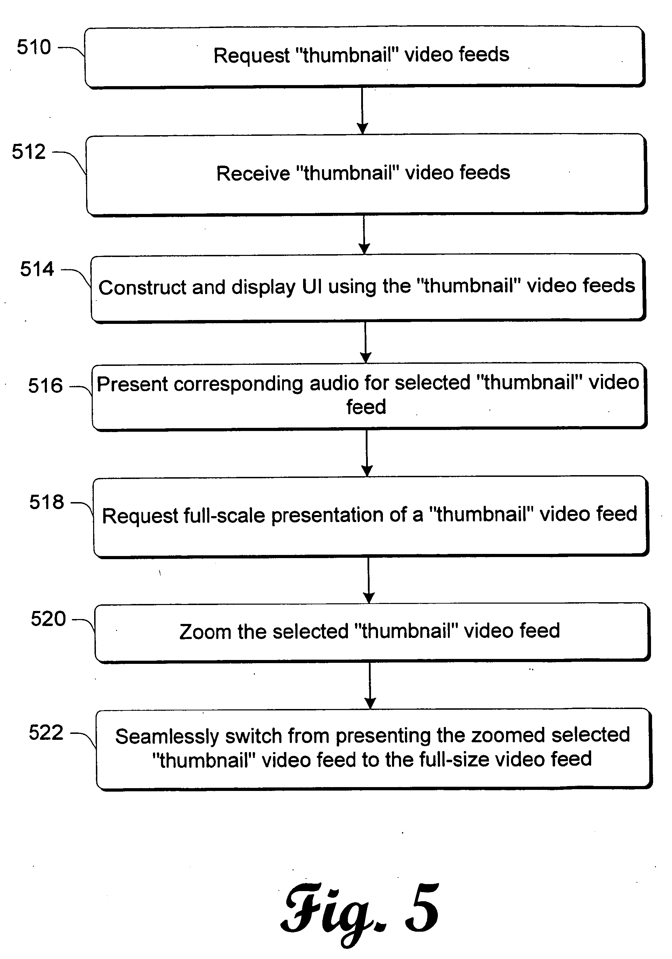

Fig. 5 shows a methodological implementation of the exemplary miniature video-feed UI producer. The implementation is performed to produce Uls with miniature video feeds. These methodological implementations may be performed in software, hardware, or a combination thereof.

At 510 of Fig. 5, the exemplary miniature video-feed UI producer requests one or more multiple thumbnail video feeds.

At 512, the exemplary miniature video-feed UI producer receives the requested thumbnail video feeds.

At 514, it constructs and presents a UI using the requested thumbnail video feeds. Examples of such UIs include those shown in Figs. 3, 4A, and 4B.

At 516, it plays the audio corresponding to a highlighted thumbnail video feed.

At 518, of Fig. 5, the exemplary miniature video-feed UI producer requests a full-scale version of its corresponding thumbnail video feed when that thumbnail video feed is selected.

At 520, it zooms the selected thumbnail video feed to take over the entire screen.

At 522, it seamlessly switches from presenting the zoomed thumbnail video feed to its full-scaled version when it is ready for such a switch. It is typically ready when the full-scaled version is received and decoded.

### Exemplary Environment

Fig. 6 illustrates an exemplary environment 600 in which the techniques, systems, and other aspects described herein may be implemented (partially or wholly). Exemplary environment 600 is a television entertainment system that facilitates distribution of multimedia.

The environment 600 includes one or more multimedia content providers 602, a content distribution system 606, and one or more presentation devices 608(1), 608(2), ..., 608(N) coupled to the content distribution system 606 via a network 610 (such a network may be multicast- & unicast-capable).

Multimedia content provider 602 includes a content server 612 and stored content 614, such as movies, television programs, commercials, music, and similar audio and/or video content. Content server 612 controls distribution of the stored content 614 from content provider 602 to the content distribution system 606. Additionally, content server 602 controls distribution of live content (e.g., content that was not previously stored, such as live feeds) and/or content stored at other locations to the content distribution system 606.

Content distribution system 606 may be coupled to a network 620, such as an intranet or the Internet. The content distribution system 606 includes a transmitter 628, and one or more content processors 630.

Content distribution system 606 is representative of a headend service that provides multimedia content to multiple subscribers.

Network 610 can include a cable television network, RF, microwave, satellite, and/or data network, such as the Internet, and may also include wired or wireless media using any unicast/multicast format or unicast/multicast protocol. Additionally, network 610 may be any type of network, using any type of network topology and any network communication protocol, and may be represented or otherwise implemented as a combination of two or more networks.

Content processor 630 processes the content received from content provider 602 prior to transmitting the content across network 608. A particular content processor 630 may encode, or otherwise process, the received content into a format that is understood by the multiple presentation devices 608(1), 608(2), ..., 608(N) coupled to network 610.

Presentation devices 608 may be implemented in a number of ways. For example, a presentation device 608(1) receives content from a satellite-based transmitter via a satellite dish 634. Presentation device 608(1) is also referred to as a set-top box or a satellite receiving device. Presentation device 608(1) is coupled to a television 636(1) for presenting the content received by the presentation device (e.g., audio data and video data), as well as a graphical user interface. A particular presentation device 608 may be coupled to any number of televisions 636 and/or similar devices that may be implemented to display or otherwise render content. Similarly, any number of presentation devices 608 may be coupled to a single television 636.

Presentation device 608(2) is also coupled to receive content from network 610 and provide the received content to associated television 636(2). Presentation device 608(N) is an example of a combination television 638 and integrated set-top box 640. In this example, the various components and functionality of the set-top box are incorporated into the television, rather than using two separate devices. The set-top box incorporated into the television may receive signals via a satellite dish or wireless antenna (such as dish 634) and/or via network 610. In some implementations, presentation devices 606 may receive content (e.g., data using IP protocol) via the Internet or an intranet.

The exemplary environment 600 also includes live or stored pay-per-view (PPV) content 642, such as PPV movie content. The stored or live content is typically multicast or broadcast on a schedule. When a device joins a PPV multicast channel, the PPV content may be viewed with a presentation device 608.

### Exemplary Presentation Device

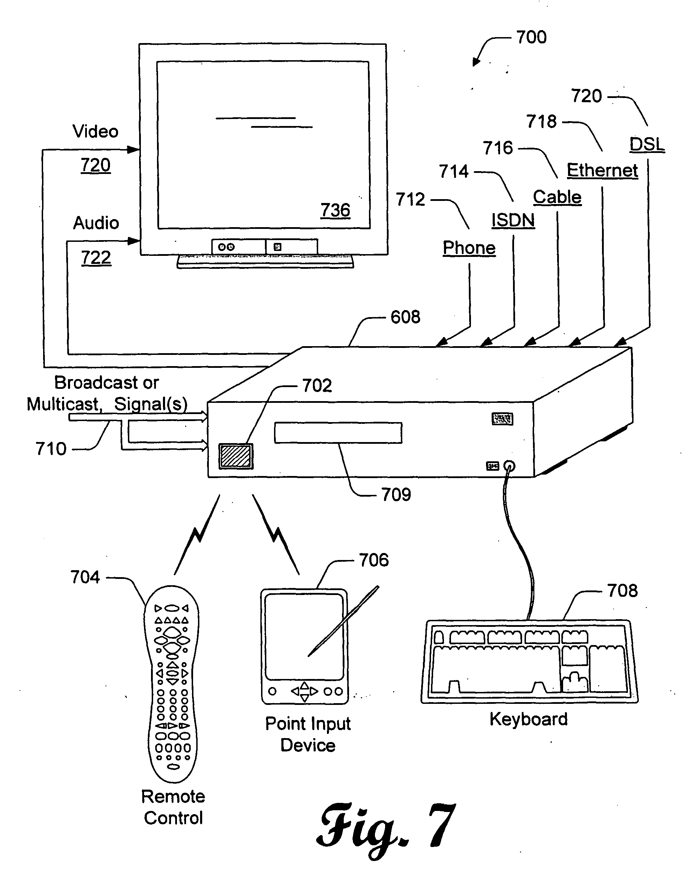

Fig. 7 illustrates an exemplary implementation 700 of a presentation device 608 shown as a standalone unit that connects to a television 736. Presentation device 608 may be implemented in any number of embodiments, including as a set-top box, a satellite receiver, a TV recorder with a hard disk, a game console, an information appliance, a DVD player, a personal video recorder, a personal computer, a home media center, a modem, and so forth.

Presentation device 608 includes a wireless receiving port 702, such as an infrared (IR) or Bluetooth wireless port, for receiving wireless communications from a remote control device 704, a handheld input device 706, or any other wireless device, such as a wireless keyboard. Handheld input device 706 may be a personal digital assistant (PDA), handheld computer, wireless phone, or the like. Additionally, a wired keyboard 708 is coupled to communicate with the presentation device 608. In alternate embodiments, remote control device 704, handheld device 706, and/or keyboard 708 may use an RF communication link or other mode of transmission to communicate with presentation device 608.

Presentation device 608 may have a storage medium reader 709 for reading content storage media, such as DVD disks. A standalone or non-standalone presentation device 608 may include the storage medium reader 709.

Presentation device 608 may receive one or more multicast signals 710 from one or more multicast sources, such as from a multicast network. Also, it may receive one or more unicast or broadcast signals 710 from one or more unicast or broadcast sources.

Presentation device 608 also includes hardware and/or software for providing the user with a graphical user interface by which the user can, for example, access various network services, configure the presentation device 608, and perform other functions.

Presentation device 608 may be capable of communicating with other devices via one or more connections including a conventional telephone link 712, an ISDN link 714, a cable link 716, an Ethernet link 718, a DSL link 720, and the like. Presentation device 608 may use any one or more of the various communication links 712-720, at a particular instant, to communicate with any number of other devices. The multicast signals may also be received via the various communication links 712-720.

Presentation device 608 generates video signal(s) 720 and audio signal(s) 722, both of which are communicated to television 636. Alternatively, video and audio signal(s) may be communicated to other audio/visual equipment, such as speakers, a video monitor, a home theater system, an audio system, and the like.

Although not shown in Fig. 7, presentation device 608 may include one or more lights or other indicators identifying the current status of the device. Additionally, the presentation device may include one or more control buttons, switches, or other selectable controls for controlling operation of the device.

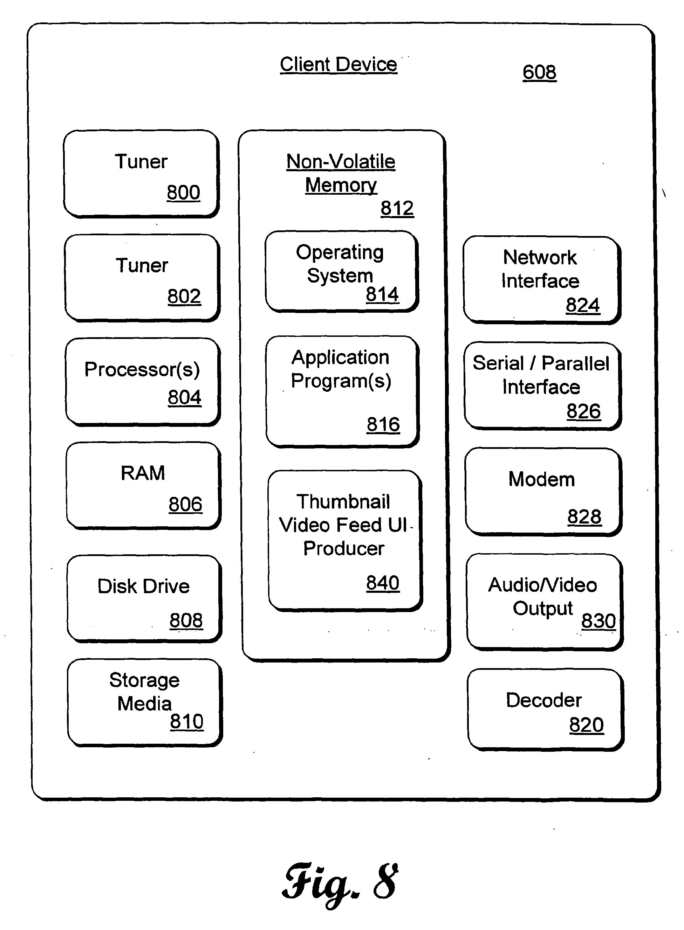

Fig. 8 illustrates selected components of presentation device 608 shown in Figs. 6 and 7. Presentation device 608 includes a first tuner 800 and an optional second tuner 802. The tuners 800 and 802 are representative of one or more in-band tuners that tune to various frequencies or channels to receive television signals, as well as an out-of-band tuner or receiver or network interface card that tunes to or receives the multicast communications channel over which other content may be multicast to presentation device 608.

The tuners 800 and 802 may be digital tuners, analog tuners, or any combination of analog and digital components used to get digital data into the presentation device 608.

Presentation device 608 also includes one or more processors 804 and one or more memory components. Examples of possible memory components include a random access memory (RAM) 806, a disk drive 808, a mass storage component 810, and a non-volatile memory 812 (e.g., ROM, Flash, EPROM, EEPROM, etc.).

Alternative implementations of presentation device 608 can include a range of processing and memory capabilities, and may include more or fewer types of memory components than those illustrated in Fig. 8.

Processor(s) 804 process various instructions to control the operation of presentation device 608 and to communicate with other electronic and computing devices. The memory. components (e.g., RAM 806, disk drive 808, storage media 810, and non-volatile memory 812) store various information and/or data such as multimedia content, electronic program data, web content data, configuration information for presentation device 608, and/or graphical user interface information. The device may cache data into any one of these many memory components.

An operating system 814 and one or more application programs 816 may be stored in non-volatile memory 812 and executed on processor 804 to provide a runtime environment. A runtime environment facilitates extensibility of presentation device 608 by allowing various interfaces to be defined that, in turn, allow application programs 816 to interact with presentation device 608.

The application programs 816 that may be implemented on the presentation device 608 may include an electronic program guide (EPG), an email program to facilitate electronic mail, and so on.

Presentation device 608 can also include other components pertaining to a television entertainment system which are not illustrated in this example for simplicity purposes. For instance, presentation device 608 can include a user interface application and user interface lights, buttons, controls, etc. to facilitate viewer interaction with the device.

Network interface 824 and serial and/or parallel interface 826 allows presentation device 608 to interact and communicate with other electronic and computing devices via various communication links. Although not shown, presentation device 608 may also include other types of data communication interfaces to communicate with other devices.

It may include a modem 828 or other communications device that facilitates communication with other electronic and computing devices via a conventional telephone line or other communications mediums.

The presentation device 608 has the ability to receive broadcast, multicast, and unicast digital data, and it may receive it using the tuners 800 or 802, the network interface 824, the modem 828, or other communications device.

Presentation device 608 also includes an audio/video output 830 that provides signals to a television or other device that processes and/or presents or otherwise renders the audio and video data. This output may be called the display.

Presentation device 608 also includes a thumbnail video feed UI producer module 840 that partially or wholly implements the exemplary miniature video-feed UI producer. It may be an application program or a hardware component.

Although shown separately, some of the components of presentation device 608 may be implemented in an application specific integrated circuit (ASIC). Additionally, a system bus (not shown) typically connects the various components within presentation device 608.

A system bus may be implemented as one or more of any of several types of bus structures, including a memory bus or memory controller, a peripheral bus, an accelerated graphics port, or a local bus using any of a variety of bus architectures. By way of example, such architectures can include a CardBus, Personal Computer Memory Card International Association (PCMCIA), Accelerated Graphics Port (AGP), Small Computer System Interface (SCSI), Universal Serial Bus (USB), IEEE 1394, a Video Electronics Standards Association (VESA) local bus, and a Peripheral Component Interconnects (PCI) bus also known as a Mezzanine bus.

### Exemplary Computing System and Environment

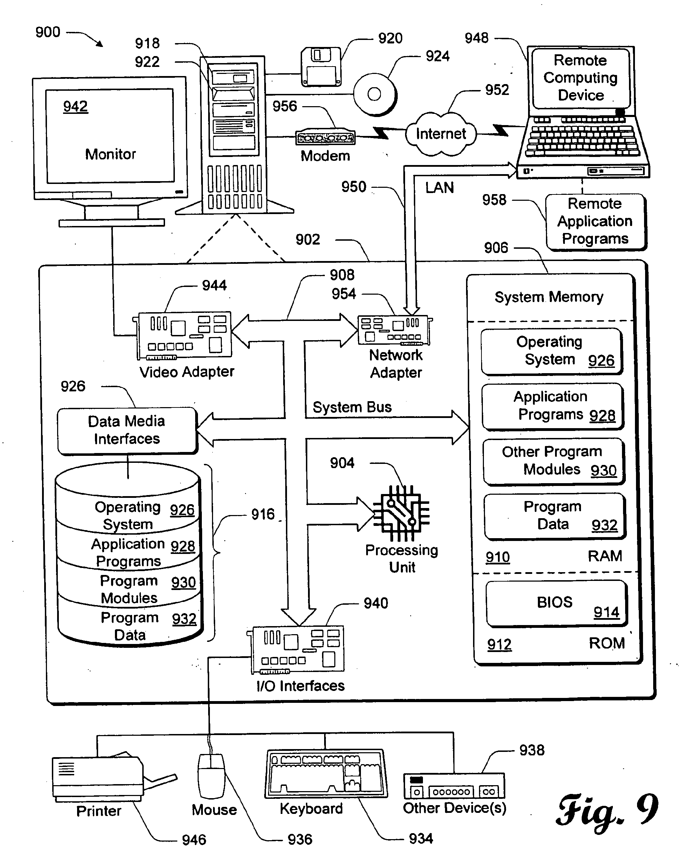

**Fig. 9** illustrates another example of a suitable computing environment 900, within which one or more implementations, as described herein, may be implemented (either fully or partially). The computing environment 900 may be utilized in the computer and network architectures described herein.

The exemplary computing environment 900 is only one example of a computing environment and is not intended to suggest any limitation as to the scope of use or functionality of the computer and network architectures. Neither should the computing environment 900 be interpreted as having any dependency or requirement relating to any one or combination of components illustrated in the exemplary computing environment 900.

The one or more embodiments, as described herein, may be implemented with numerous other general purpose or special purpose computing system environments or configurations. Examples of well known computing systems, environments, and/or configurations that may be suitable for use include, but are not limited to, personal computers, server computers, thin clients, thick clients, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The one or more implementations, as described herein, may be described in the general context of computer-executable instructions, such as program modules, being executed by a computer. Generally, program modules include routines, programs, objects, components, data structures, etc. that perform particular tasks or implement particular abstract data types and functions.

The one or more implementations, as described herein, may also be practiced in distributed computing environments where tasks are performed by remote processing devices that are linked through a communications network. In a distributed computing environment, program modules may be located in both local and remote computer storage media including memory storage devices.

The computing environment 900 includes a general-purpose computing device in the form of a computer 902. The components of computer 902 may include, but are not limited to, one or more processors or processing units 904, a system memory 906, and a system bus 908 that couples various system components, including the processor 904, to the system memory 906.

The system bus 908 represents one or more of any of several types of bus structures, including a memory bus or memory controller, a peripheral bus, an accelerated graphics port, and a processor or local bus using any of a variety of bus architectures. By way of example, such architectures can include a CardBus, Personal Computer Memory Card International Association (PCMCIA), Accelerated Graphics Port (AGP), Small Computer System Interface (SCSI), Universal Serial Bus (USB), IEEE 1394, a Video Electronics Standards Association (VESA) local bus, and a Peripheral Component Interconnects (PCI) bus also known as a Mezzanine bus.

Computer 902 typically includes a variety of computer-readable media. Such media may be any available media that are accessible by computer 902 and may include both volatile and non-volatile media, and both removable and non-removable media.

The system memory 906 includes computer-readable media in the form of volatile memory, such as random access memory (RAM) 910, and/or non-volatile memory, such as read only memory (ROM) 912. A basic input/output system (BIOS) 914, containing the basic routines that help to transfer information between elements within computer 902, such as during start-up, is stored in ROM 912. RAM 910 typically contains data and/or program modules that are immediately accessible to and/or presently operated by the processing unit 904.

Computer 902 may also include other removable/non-removable, volatile/non-volatile computer storage media. By way of example, Fig. 9 illustrates a hard disk drive 916 for reading from and writing to a non-removable, non-volatile magnetic media (not shown), a magnetic disk drive 918 for reading from and writing to a removable, non-volatile magnetic disk 920 (e.g., a "floppy disk"), and an optical disk drive 922 for reading from and/or writing to a removable, non-volatile optical disk 924 such as a CD-ROM, DVD-ROM, or other optical media. The hard disk drive 916, magnetic disk drive 918, and optical disk drive 922 are each connected to the system bus 908 by one or more data media interfaces 926. Alternatively, the hard disk drive 916, magnetic disk drive 918, and optical disk drive 922 may be connected to the system bus 908 by one or more other interfaces (not shown).

The disk drives and their associated computer-readable media provide non-volatile storage of computer readable instructions, data structures, program modules, and other data for computer 902. Although the example illustrates a hard disk 916, a removable magnetic disk 920, and a removable optical disk 924, it is to be appreciated that other types of computer-readable media, which may store data that is accessible by a computer, such as magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like, may also be utilized to implement the exemplary computing system and environment.

Any number of program modules may be stored on the hard disk 916, magnetic disk 920, optical disk 924, ROM 912, and/or RAM 910, including, by way of example, an operating system 926, one or more application programs 928, other program modules 930, and program data 932.

A user may enter commands and information into computer 902 via input devices such as a keyboard 934 and a pointing device 936 (e.g., a "mouse"). Other input devices 938 (not shown specifically) may include a microphone, joystick, game pad, satellite dish, serial port, scanner, and/or the like. These and other input devices are connected to the processing unit 904 via input/output interfaces 940 that are coupled to the system bus 908, but may be connected by other interface and bus structures, such as a parallel port, game port, or a universal serial bus (USB).

A monitor 942 or other type of display device may also be connected to the system bus 908 via an interface, such as a video adapter 944. In addition to the monitor 942, other output peripheral devices may include components, such as speakers (not shown) and a printer 946, which may be connected to computer 902 via the input/output interfaces 940.

Computer 902 may operate in a networked environment using logical connections to one or more remote computers, such as a remote computing device 948. By way of example, the remote computing device 948 may be a personal computer, portable computer, a server, a router, a network computer, a peer device or other common network node, and the like. The remote computing device 948 is illustrated as a portable computer that may include many or all of the elements and features described herein, relative to computer 902.

Logical connections between computer 902 and the remote computer 948 are depicted as a local area network (LAN) 950 and a general wide area network (WAN) 952. Such networking environments are commonplace in offices, enterprise-wide computer networks, intranets, and the Internet.

When implemented in a LAN networking environment, the computer 902 is connected to a local network 950 via a network interface or adapter 954. When implemented in a WAN networking environment, the computer 902 typically includes a modem 956 or other means for establishing communications over the wide network 952. The modem 956, which may be internal or external to computer 902, may be connected to the system bus 908 via the input/output interfaces 940 or other appropriate mechanisms. It is to be appreciated that the illustrated network connections are exemplary and that other means of establishing communication link(s) between the computers 902 and 948 may be employed.

In a networked environment, such as that illustrated with computing environment 900, program modules depicted relative to the computer 902, or portions thereof, may be stored in a remote memory storage device. By way of example, remote application programs 958 reside on a memory device of remote computer 948. For purposes of illustration, application programs and other executable program components, such as the operating system, are illustrated herein as discrete blocks, although it is recognized that such programs and components reside at various times in different storage components of the computing device 902, and are executed by the data processor(s) of the computer.

### Computer-Executable Instructions

One or more implementations, as described herein, may be described in the general context of computer-executable instructions, such as program modules, executed by one or more computers or other devices. Generally, program modules include routines, programs, objects, components, data structures, etc. that perform particular tasks or implement particular abstract data types. Typically, the functionality of the program modules may be combined or distributed as desired in various embodiments.

### Computer Readable Media

One or more implementations, as described herein, may be stored on or transmitted across some form of computer readable media. Computer readable media may be any available media that may be accessed by a computer. By way of example, and not limitation, computer readable media may comprise "computer storage media" and "communications media."

"Computer storage media" include volatile and non-volatile, removable and non-removable media implemented in any method or technology for storage of information such as computer readable instructions, data structures, program modules, or other data. Computer storage media include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by a computer.

"Communication media" typically embody computer readable instructions, data structures, program modules, or other data in a modulated data signal, such as carrier wave or other transport mechanism. Communication media also include any information delivery media.

The term "modulated data signal" means a signal that has one or more of its characteristics set or changed in such a manner as to encode information in the signal. By way of example, and not limitation, communication media include wired media, such as a wired network or direct-wired connection, and wireless media such as acoustic, RF, infrared, and other wireless media. Combinations of any of the above are also included within the scope of computer readable media.

### Conclusion

Although the invention has been described in language specific to structural features and/or methodological steps, it is to be understood that the invention defined in the appended claims is not necessarily limited to the specific features or steps described. Rather, the specific features and steps are disclosed as preferred forms of implementing the claimed invention.

## Claims

1. A computer-readable medium having computer-executable instructions that, when executed by a computer, performs a method comprising:
reducing the scale of a video feed to produce its "thumbnail" video feed;
transmitting the thumbnail video feed over a communications network.

2. A medium as recited in claim 1, wherein the method further comprises:
receiving a request for the thumbnail version of the video feed,
wherein the transmitting is performed in response to such request.

3. A medium as recited in claim 1, wherein the method further comprises preprocessing the video feed to aid in producing a low-resolution version.

4. A computing device comprising:
a media-stream transmitter;
a medium as recited in claim 1.

5. A method comprising:
reducing the scale of a video feed to produce its "thumbnail" video feed;
transmitting the thumbnail video feed over a communications network.

6. A method as recited in claim 5, further comprising:
receiving a request for the thumbnail version of the video feed,
wherein the transmitting is performed in response to such request.

7. A method as recited in claim 5, further comprising preprocessing the video feed to aid in producing a low-resolution version.

8. A computer-readable medium having computer-executable instructions that, when executed by a computer, performs a method comprising:
receiving one or more scaled-reduced versions of video feeds ("thumbnail video feeds) over a communication network;
constructing and presenting a user-interface (UI) comprising the one or more thumbnail video feeds.

9. A medium as recited in claim 8, wherein the method further comprises requesting one or more thumbnail video feeds.

10. A medium as recited in claim 8, wherein the method further comprises presenting audio that corresponds to one of the presented thumbnail video feeds.

11. A medium as recited in claim 8, wherein the method further comprises:
receiving a highlight indication for one of the presented thumbnail video feeds;
presenting audio that corresponds to that highlighted one of the presented thumbnail video feeds.

12. A medium as recited in claim 8, wherein the method further comprises:
requesting a full-scale version of a select one of the presented thumbnail video feeds;
zooming the select one of the presented thumbnail video feeds so that it inhabits much or all of the available screen space.

13. A medium as recited in claim 8, wherein the method further comprises:
receiving a selection request that selects one of the presented thumbnail video feeds;
requesting a full-scale version of the select one of the presented thumbnail video feeds;
zooming the select one of the presented thumbnail video feeds so that it inhabits much or all of the available screen space.

14. A medium as recited in claim 8, wherein the method further comprises:
requesting a full-scale version of a select one of the presented thumbnail video feeds;
zooming the select one of the presented thumbnail video feeds so that it inhabits much or all of the available screen space;
presenting the full-scale version of the select one of the presented thumbnail video feeds when the full-scale version is received and ready for presentation.

15. A medium as recited in claim 8, wherein the UI that is constructed and presented further comprises information associated with the one or more thumbnail video feeds.

16. A medium as recited in claim 8, wherein the UI that is constructed and presented further comprises electronic program information associated with the one or more thumbnail video feeds.

17. A medium as recited in claim 8, wherein the UI that is constructed and presented further comprises an on-going full-scale video feed.

18. A computing device comprising:
a media-stream presentation device;
a medium as recited in claim 8.

19. A method facilitating production of a user-interface (UI), the method comprising:
receiving one or more scale-reduced versions of video feeds ("thumbnail video feeds) over a communication network;
constructing and presenting a UI comprising the one or more thumbnail video feeds.

20. A method as recited in claim 19 further comprising requesting one or more thumbnail video feeds.

21. A method as recited in claim 19 further comprising presenting audio that corresponds to one of the presented thumbnail video feeds.

22. A method as recited in claim 19 further comprising:
receiving a highlight indication for one of the presented thumbnail video feeds;
presenting audio that corresponds to that highlighted one of the presented thumbnail video feeds.

23. A method as recited in claim 19 further comprising:
requesting a full-scale version of a select one of the presented thumbnail video feeds;
zooming the select one of the presented thumbnail video feeds so that it inhabits much or all of the available screen space.

24. A method as recited in claim 19 further comprising:
requesting a full-scale version of a select one of the presented thumbnail video feeds;
zooming the select one of the presented thumbnail video feeds so that it inhabits much or all of the available screen space;
presenting the full-scale version of the select one of the presented thumbnail video feeds when the full-scale version is received and ready for presentation.

25. A method as recited in claim 19, wherein the UI that is constructed and presented further comprises information associated with the one or more thumbnail video feeds.

26. A method as recited in claim 19, wherein the UI that is constructed and presented further comprises electronic program information associated with the one or more thumbnail video feeds.

27. A method as recited in claim 19, wherein the UI that is constructed and presented further comprises an on-going full-scale video feed.

28. A computer comprising one or more computer-readable media having computer-executable instructions that, when executed by the computer, perform the method as recited in claim 19.

29. A multimedia system comprising:
a receiving unit configured for receiving one or more scaled-reduced version of video feeds ("thumbnail video feeds) over a communication network;
a user-interface (UI) generator configured to generate a UI comprising the one or more thumbnail video feeds;
a presentation device configured for presentation of the UI.

30. A system as recited in claim 29 further comprising a UI selection device configured for the user to either highlight or select the one or more thumbnail video feeds.

31. A computer-readable medium having computer-executable instructions that, when executed by a computer, produce a user-interface (UI) of a multimedia system, the UI comprising multiple "thumbnail" display areas, each area configured to display a reduced-scale ("thumbnail") video feed received via a communications network.

32. A medium as recited in claim 31, wherein the UI further comprises at least one information display area configured to display information associated with a corresponding thumbnail video feed.

33. A medium as recited in claim 31, wherein the UI further comprises at least one information display area configured to display electronic program guide information associated with a corresponding thumbnail video feed.

34. A medium as recited in claim 31, wherein each thumbnail video feed displayed is a separate and distinct video feed.

35. A medium as recited in claim 31, wherein the UI further comprises an executable program module configured to respond to user selection of one of the multiple thumbnail display areas.
